Europäisches Patentamt

European Patent Office

Office européen des brevets

(19)

(11) Veröffentlichungsnummer: **0 184 650**
**A1**

(12) **EUROPÄISCHE PATENTANMELDUNG**

(21) Anmeldenummer: **85113575.6**

(22) Anmeldetag: **25.10.85**

(51) Int. Cl.⁴: **B 23 K 9/04**

(30) Priorität: **14.12.84 CH 5948/84**

(43) Veröffentlichungstag der Anmeldung: **18.06.86**
Patentblatt 86/25

(84) Benannte Vertragsstaaten: **AT DE FR GB IT**

(71) Anmelder: **GEBRÜDER SULZER AKTIENGESELLSCHAFT**, Zürcherstrasse 9, **CH-8401 Winterthur (CH)**

(72) Erfinder: **Geisseler, Max, Frauenackerstrasse 9, CH-8355 Ettenhausen (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) Verfahren zur Herstellung eines zylindrischen Hohlkörpers und Anlage zum Durchführen des Verfahrens.

(57) Der zylindrische Hohlkörper (1) wird durch Bilden eines Aufbaukörpers (2) auf einem Grundkörper (3) mittels formgebendem Aufbauschweißen hergestellt. Er wird während des Aufbauschweißens um seine horizontale Achse gedreht und dabei von mindestens zwei Rollen (11, 11') unmittelbar getragen.

Hierdurch wird es auf einfache und kostengünstige Art möglich, während des Aufbauschweißens auch eine Wärmebeeinflussung des Hohlkörpers von seiner Innenseite her vorzunehmen.

P.5920 Stph

Gebrüder Sulzer Aktiengesellschaft, Winterthur, Schweiz

Verfahren zur Herstellung eines zylindrischen Hohlkörpers und Anlage zum Durchführen des Verfahrens.

Die Erfindung betrifft ein Verfahren zur Herstellung eines im wesentlichen zylindrischen Hohlkörpers, der durch Bilden eines Aufbaukörpers auf einem Grundkörper mittels formgebendem Aufbauschweissen entsteht, wobei der zylindrische Hohlkörper während des Aufbauschweissens um seine horizontale Längsachse gedreht wird.

Aus der DE-PS 33 00 827 ist ein solches Verfahren bekannt, bei dem zum Stützen des Grundkörpers während des Aufbauschweissens eine Vorrichtung verwendet wird, die aus einem drehbar gelagerten, antreibbaren Stützkörper und einem in radialer Richtung veränderbaren Zwischenglied besteht, das den Stützkörper mit dem Grundkörper verbindet. Das Zwischenglied seinerseits besteht aus verformbaren, über den Umfang des Stützkörpers gleichmässig verteilten, lösbaren Metallprofilen in Form von Rohren. Das mit dieser Vorrichtung ausgeübte Herstellungsverfahren hat den Nachteil, dass eine Wärmebeeinflussung, d.h. Erwärmung und/oder Kühlung, während des Aufbauens nur von aussen erfolgen kann. Bei gleichzeitiger Erwärmung und Kühlung in verschiedenen Bereichen des Hohlkörpers kann es vorkommen, dass Kühlmittel aus dem Kühlbereich in den zu erwärmenden Bereich gelangt und dort die mit der Erwärmung beabsichtigten Wirkungen stört. Ausserdem ist das bekannte Verfahren auch aufwendig und kostspielig, insbesondere auch im Hinblick auf das Gewicht der aus dem Grundkörper, dem Zwischenglied und dem Stützkörper bestehenden Einheit, die während des Aufbauschweissens gedreht werden muss.

Es ist Aufgabe der Erfindung, das eingangs genannte Herstellungsverfahren so zu verbessern, dass während des Aufbauschweissens auch eine Wärmebeeinflussung des Hohlkörpers von seiner Innenseite her möglich ist und dass es einfacher und kostengünstiger als das bekannte Verfahren ist.

Diese Aufgabe wird erfindungsgemäss dadurch gelöst, dass während des Aufbauschweissens der Hohlkörper von mindestens zwei Rollen unmittelbar getragen wird. Durch das unmittelbare Abstützen des Hohlkörpers auf den tragenden Rollen entfällt die Notwendigkeit, einen Stützkörper vorzusehen und diesen auf mühsame Weise zu positionieren und dann an dem Grundkörper zu befestigen. Ein besonderer Vorteil der Erfindung besteht darin, dass wegen des Fehlens eines Stützkörpers sowie eines Zwischengliedes zum Grundkörper das Innere des zylindrischen Hohlkörpers während des Aufbauschweissens grösstenteils frei ist, so dass es durch mindestens eines der beiden Enden des Hohlkörpers hindurch zugänglich ist, womit sich die Möglichkeit ergibt, eine Wärmebeeinflussung des Hohlkörpers von innen her vorzunehmen. Auch Inspektionen sind auf der Innenseite möglich. Ausserdem wird auf einfache Weise das Auftreten von Schrumpfspannungen beim Abkühlen des Hohlkörpers vermieden. Andererseits ist es
möglich, mittels gezielt erzeugter Schrumpfspannungen
vorgespannte Druckbehälter bzw. -zylinder herzustellen.

Das Herstellen von ringförmigen Laufbahnen für die
Rollen nach Anspruch 2 schafft eine wesentliche Erleichterung des Verfahrens, da die flanschartigen Absätze die Formbeständigkeit des Grundkörpers verbessern
und dieser · relativ dünnwandig sein kann.

Durch das Verfahren nach Anspruch 3 werden glatte Laufflächen für die Rollen geschaffen, was sich auf die Genauigkeit der herzustellenden Hohlkörper günstig auswirkt.

Die Stromführung nach Anspruch 6 ermöglicht besonders
hohe Abschmelzleistungen bei einem sehr geringen Pulververbrauch.

Die Erfindung betrifft auch eine Anlage zum Durchführen
des Herstellungsverfahrens, die dadurch gekennzeichnet
ist, dass mindestens eine der tragenden Rollen als
drehender Antrieb für den Hohlkörper ausgebildet ist.

Einige Ausführungsbeispiele der Erfindung werden in der
folgenden Beschreibung anhand der Zeichnung näher erläutert. Es zeigen:

Fig. 1      eine schematische Ansicht einer Anlage zur
            Herstellung eines Hohlkörpers nach dem
            erfindungsgemässen Verfahren, wobei der
            Hohlkörper teilweise längsgeschnitten ist
            und ein auf der einen Seite ganz und auf
            der anderen Seite teilweise geschlossenes
            Reaktordruckgefäss darstellt,

Fig. 2          einen Schnitt gemäss der Linie II-II

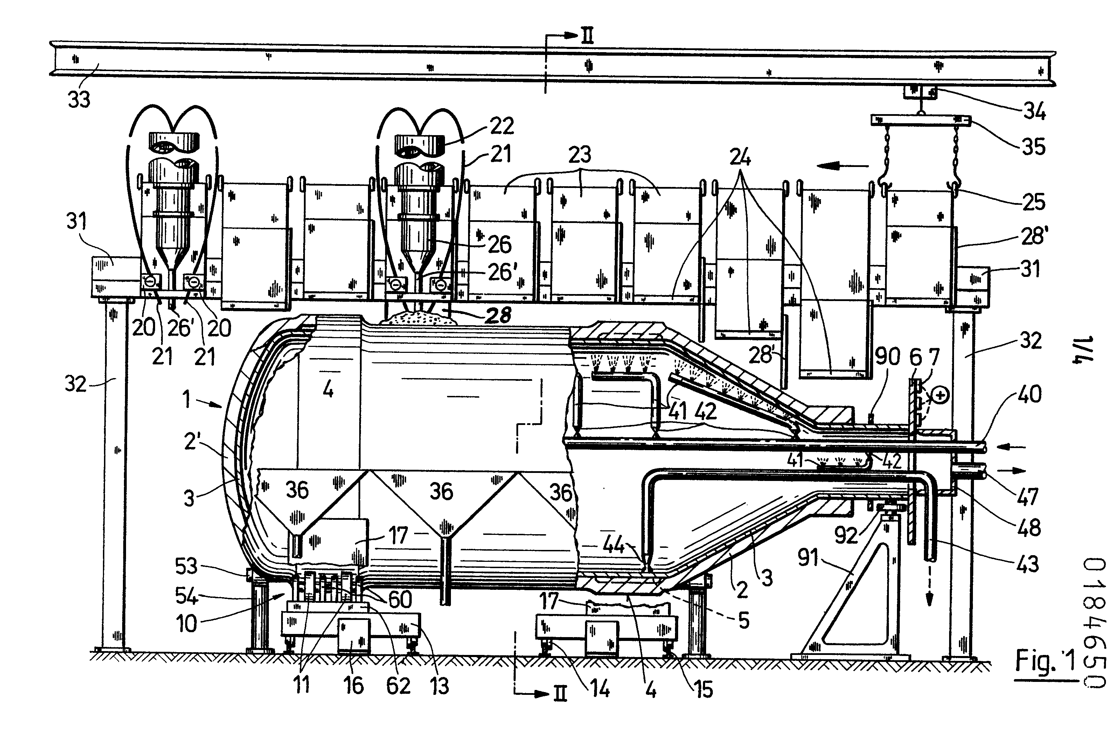

                in  Fig. 1,

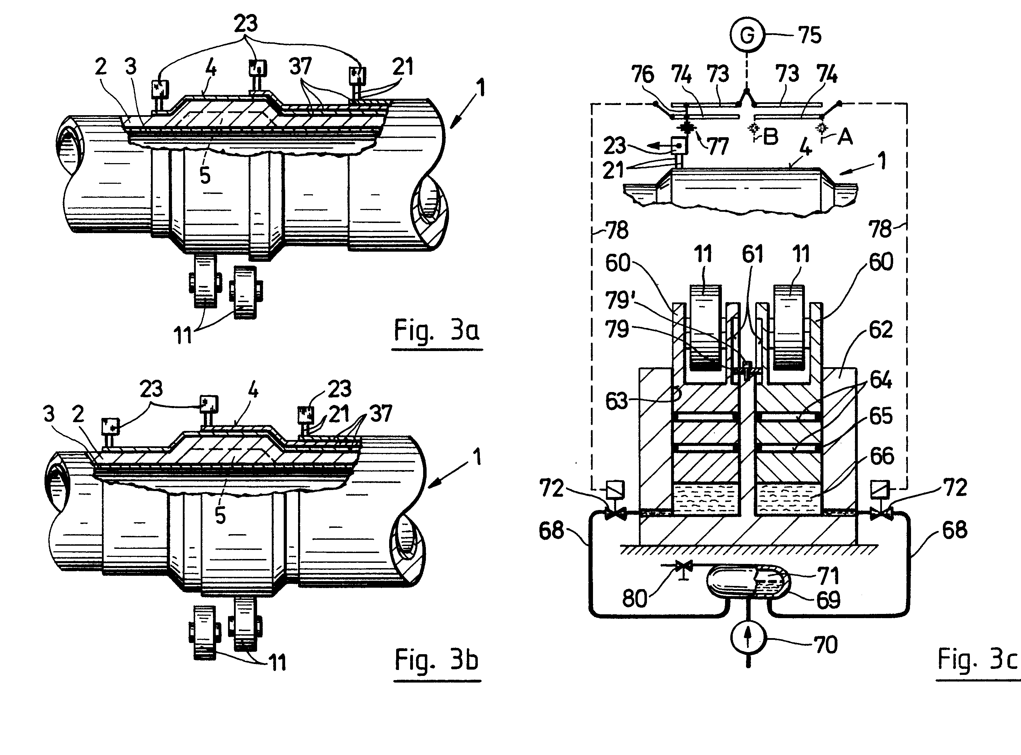

Fig. 3a         je eine Phase im Ablauf des Aufbauschweis-
und 3b          sens im Bereich einer Laufbahn des Hohlkörpers, wobei dieser stark verzerrt dargestellt ist,

Fig. 3c         schematisch eine Anlage zum Steuern der
                Abstützung der Rollen während des Aufbauschweissens der zugehörigen Laufbahn am
                Hohlkörper,

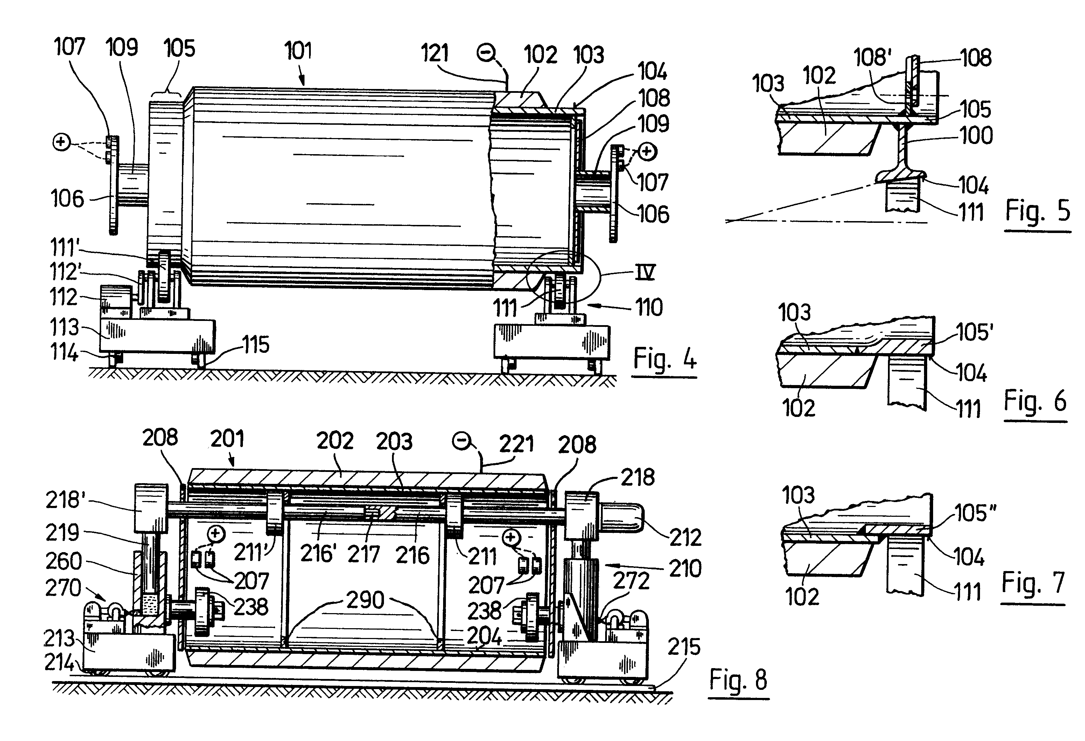

Fig. 4          eine schematische Teilansicht einer
                weiteren Anlage für die Herstellung eines
                beidseitig offenen zylindrischen Hohlkörpers,

Fig. 5          Ausbildungsvarianten des Details IV in
bis 7           Fig. 4 und

Fig. 8          eine weitere, schematische Teilansicht
                einer Anlage für die Herstellung eines
                beidseitig offenen Hohlkörpers.

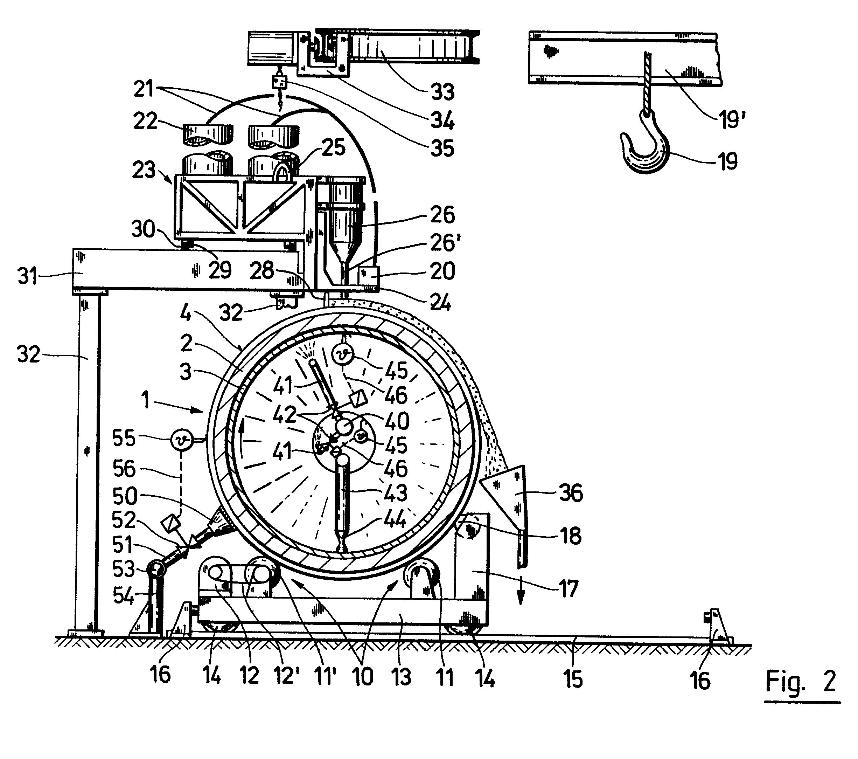

Gemäss Fig. 1 und 2 entsteht ein in der Herstellung
befindlicher, als dickwandiges, chemisches Reaktordruckgefäss bestimmter Hohlkörper 1 durch formgebendes Aufbauschweissen eines Aufbaukörpers 2 auf einem Grundkörper 3. Der Hohlkörper 1 stützt sich im Bereich
zweier ringförmiger Bahnen 4 auf acht Rollen 11, 11',
die paarweise in vier Rollenböcken 10 gelagert sind,
wobei die jeweils zu einer Bahn gehörenden Rollenböcke
10 paarweise auf zwei Wagen 13 befestigt sind. Die
Wagen 13 rollen mittels Rädern 14 auf geraden Schienen
15 am Boden.

Der zurücklegbare Weg eines jeden Wagens 13 auf den Schienen 15 ist von zwei Prellböcken 16 begrenzt. Zwei Rollen 11' eines der Rollenpaare sind von einem drehzahlvariablen Antriebsmotor 12 angetrieben, wobei jede Rolle 11' mittels einer Kette 12' und zwei entsprechenden Kettenrädern mit einem der beiden Enden der Motorenwelle verbunden ist. Die Rollen 11' treiben ihrerseits den Hohlkörper 1, der dann gemäss Fig. 2 im Uhrzeigersinn gedreht wird.

Auf jedem Wagen 13 ist eine Schleifmaschine 17 so angeordnet, dass ihre Schleifscheiben 18 die Bahn 4 - in Drehrichtung des Hohlkörpers 1 gesehen - vor den Rollen 11, 11' bearbeiten, so dass sämtliche Zonen der Bahn 4 vor einer Berührung mit den Rollen 11, 11' geglättet sind.

Ein in Fig. 2 nur angedeuteter, auf einer Kranbahn 19' laufender Kran 19 überdeckt die in Fig. 2 rechte Zone der Schienen 15 und dient der Handhabung des Hohlkörpers 1 sowie seines Transportes vor und nach dem Aufbauschweissen.

Ein vertikaler, auf den den kleinsten Durchmesser aufweisenden zylindrischen Teil des Grundkörpers 3 befestigter Flansch 90 und eine dazu parallele Kontaktscheibe 6 sind mit geringem Spiel beidseitig einer um eine vertikale Achse drehbaren Führungsrolle 92 angeordnet, wobei die Führungsrolle in einem Lagerbock 91 gelagert ist, der am Boden fixiert ist. Diese Anordnung verhindert axiale Verschiebungen des Hohlkörpers 1 während des Aufbauschweissens, ohne jedoch die Verschiebung des Hohlkörpers 1 entlang der Schienen 15 zu behindern.

Entlang der höchstgelegenen Mantellinie des Hohlkörpers 1 sind Schweissköpfe 20 paarweise angeordnet. Jedem Paar Schweissköpfe 20 ist ein Pulverbehälter 26 zugeordnet, aus dem über ein Pulverrohr 26' Schweisspulver dem Hohlkörper 1 zugeführt wird. Jedem Schweisskopf 20 wird ein Schweissdraht 21 aus einem Drahtbehälter 22 zugeführt. Jedes Paar Schweissköpfe 20 ist auf einem an einem Schweisswagen 23 vertikal verschiebbaren Tisch 24 befestigt. Auf jedem Schweisswagen 23 sind die zugehörigen Drahtbehälter 22 und Pulverbehälter 26 festgemacht. Der Schweisswagen 23 enthält nicht gezeigte Mittel, mit denen auf bekannte Weise die Höhenlage des Tisches 24 eingestellt werden kann, wobei das Pulverrohr 26' als Faltenbalg oder -schlauch ausgebildet ist, so dass die Einstellbarkeit des Tisches 24 im gewünschten Höhenbereich nicht beeinträchtigt wird. Am Tisch 24 befestigte Haltebleche 28 verhindern ein Wegrieseln des Schweisspulvers entgegen der Drehrichtung des Hohlkörpers 1. Zusätzliche, ausfahrbare Haltebleche 28' verhindern auf übliche Art ein Herunterrieseln des Schweisspulvers entlang des Mantels des konischen Teiles des Hohlkörpers 1. Die Schweisswagen 23 stützen sich mittels Rädern 29 auf geraden Schienen 30, die auf einer Plattform 31 angeordnet sind. Die Plattform 31 bildet zugleich einen die Zugänglichkeit der Schweisswagen 23 gewährleistenden Gang und ist auf dem Boden mittels vertikalen Trägern 32 befestigt, die ausserhalb des während des Aufbauschweissens vorgesehenen Arbeitsbereichs am Hohlkörper 1 stehen. Nicht gezeigte Antriebsmittel - die sowohl an den Schweisswagen 23 wie an der Plattform 31 angeordnet sein können - bewirken auf bekannte Weise eine gleichmässige, horizontale, gerade und regulierbare Fortbewegung der Schweisswagen 23 von rechts nach links in Fig. 1. Es sind soviele Schweisswagen 23 vorgesehen, dass über die ganze Länge des Hohlkörpers 1 gleichzeitig mit den Schweissköpfen 20 geschweisst werden kann;
zwei zusätzliche Schweisswagen 23 sind noch verfügbar.
Eine geschlossene Hängebahn 33 mit einer Laufkatze 34,
die mit Hilfe einer Traverse 35, zweier Ketten und
Haken die Schweisswagen 23 an Oesen 25 heben kann,
dient dem Rücktransport der Schweisswagen 23 vom linken
zum rechten Ende des Hohlkörpers 1.

Die während des Schweissens erzeugte Schlacke und die
Reste des Schweisspulvers werden von einem Schlackentrichter 36 aufgefangen und von dort aus auf bekannte
Weise zur Beseitigung bzw. Wiederverwendung weiter befördert. Nicht gezeigte Drahtbürsten bzw. Nadelhammer
sind zum Entfernen festsitzender Schlackenreste vorgesehen.
Die für das Unterpulverschweissverfahren notwendige Vorwärmung des Hohlkörpers 1 wird mit Hilfe von Gasbrennern
50 erreicht. Das Gas wird aus einer nicht gezeigten
Quelle zu einer Gasverteilerleitung 53 geführt, die
sich auf vertikalen Stützen 54 abstützt. Gasleitungen 51
verbinden die Gasbrenner 50 mit der Gasverteilerleitung
53 und enthalten Gassteuerventile 52, die über Signalleitungen 56 von auf der äusseren Oberfläche des Hohlkörpers 1 und vor den Schweissstellen gleitenden
Temperaturfühlern 55 angesteuert werden.

Bekanntlich werden im Unterpulverschweissverfahren zu
hohe Temperaturen des Werkstückes mittels Kühlung vermieden. Es ist charakteristisch für die Erfindung, dass
die Kühlung von der Innenseite des Hohlkörpers 1 her
geschehen kann, da die Kühlmittelleitungen problemlos
mindestens an einem seiner beiden Enden in das Innere
geführt werden können. Gemäss Fig. 1 und 2 wird entmineralisiertes Kühlwasser durch eine Kühlwasserleitung
40 eingeführt und mittels Zerstäubungsdüsen, die in Zweigleitungen 41 sitzen, auf die Innenwand des Hohlkörpers 1 gespritzt. Eventuell sich im unteren Bereich des Hohlkörpers 1 sammelndes Wasser wird von einer nicht gezeigten Pumpe mittels eines Venturieinlasses 44 über eine Abfuhrleitung 43 abgesogen. Ein ebenfalls nicht gezeigtes Gebläse saugt den entstehenden Dampf über eine Dampfleitung 47 aus dem Inneren des Hohlkörpers 1 ab, wobei die Dampfleitung 47 von einer von der Kühlwasserleitung 40 und der Abfuhrleitung 43 getragenen Blechhaube 48 ausgeht, die das offene Ende des Grundkörpers 3 überspannt. Die Kühlwassermenge wird mittels in den Zweigleitungen 41 angeordneter Ventile 42 gesteuert, die von die innere oder auch die äussere Wand des Hohlkörpers 1 gleitend berührenden Temperaturfühlern 45 mittels Signalleitungen 46 betätigt werden.

Regeltechnisch wird die Länge des Hohlkörpers 1 in etwa einen Meter breite, ringförmige Abschnitte aufgeteilt, wobei auf jeden Abschnitt ein Gasbrenner 50 und eine Zweigleitung 41 einwirken. Gegebenenfalls können die Ventile 42 und Gassteuerventile 52 auch von einem einzigen Temperaturfühler je Abschnitt angesteuert werden.

Schweisstechnisch werden die Schweissdrähte 21 mit dem negativen Pol eines nicht gezeigten Gleichstromgenerators verbunden. Der Grundkörper 3 wird mittels Kontakten 7, die auf der mit dem Grundkörper 3 leitend verbundenen Kontaktscheibe 6 schleifen, mit dem positiven Pol des Gleichstromgenerators verbunden. Es ist bekannt, die Kontaktscheibe 6, zwecks eines besseren elektrischen Kontaktes, während des Aufbauschweissens kontinuierlich zu reinigen, was hier einfachheitshalber nicht gezeigt ist. Zwischen der Kontaktscheibe 6 und der Blechhaube 48 ist eine Dichtung - vorzugsweise eine Labyrinthdichtung - vorgesehen. Die hier erwählte Art der Stromführung weist wesentliche Vorteile gegenüber einer Unterpulverschweissung mit Wechselstrom auf: Die Schweissung unter Gleichstrom bewirkt eine etwa 50% grössere stündliche Abschmelzung bei einem um annähernd 25% kleinerem Schweisspulververbrauch je kg aufgetragenem Schweissgut.

Im wesentlichen erfolgt die erfindungsgemässe Herstellung des Hohlkörpers 1 nach    Fig. 1 und 2 gemäss den folgenden Herstellungsphasen.

- Die verschiedenen zylindrischen Bestandteile des Grundkörpers 3 sowie sein konischer Teil und sein Boden werden einzeln gefertigt.

- Auf die konvexe Seite des Bodens wird auf bekannte Weise durch Aufbauschweissen ein erster Teil 2' des Aufbaukörpers 2 aufgebracht.

- Die genannten Bestandteile des Grundkörpers 3 werden nun zusammengeschweisst, und der Grundkörper 3 wird mittels des Krans 19 auf die Rollenböcke 10 aufgesetzt, wobei der axiale Abstand der Rollenböcke 10 voneinander so gewählt wird, dass die Rollen in die Bereiche zu liegen kommen, die den zukünftigen Bahnen 4 entsprechen. Daraufhin werden die Wagen 13 bis zu den in Fig. 2 linken Prellböcken 16 geschoben, so dass der Grundkörper unterhalb der Schweissköpfe zu liegen kommt.

- Der Antriebsmotor 12 wird eingeschaltet und die Rollen 11' mittels der Kette 12' angetrieben, wodurch der Grundkörper 3 um seine horizontale Längsachse gedreht wird. Mit Hilfe zweier Schweisswagen 23 und der zugehörigen Schweissköpfe 20, Pulverbehälter 26 und Drahtbehälter 22 werden zunächst im Bereich der Rollen zwei flanschartige, etwa 5mm hohe Absätze 5 durch Aufbauschweissen aufgetragen. Der elektrische Gleichstrom fliesst dabei von den Schweissdrähten 21 zu den an der Kontaktscheibe 6 schleifenden Kontakten 7. Die durch das Aufbauschweissen laufend neu gebildete Lauffläche 4 wird ständig von der Schleifscheibe 18 - vor der ersten Berührung mit den Rollen 11 - bearbeitet, so dass die vom Erstarren des geschmolzenen Metalls herrührenden Unebenheiten verschwinden.

- Auf die gleiche Weise wie die Herstellung der flanschartigen Absätze 5 wird dann der gesamte Aufbau des Hohlkörpers durchgeführt, wobei die Schweisswagen 23 in Fig. 1 von rechts nach links bewegt und nach dem Ausfahren am linken Ende des Hohlkörpers 1 von der Laufkatze 34 mittels der Traverse 35 entlang der Hängebahn 33 zum in Fig. 1 rechten Ende des Hohlkörpers 1 gebracht werden.

- Nach dem Schweissen kann der Grundkörper 3 mittels bekannter spanabhebender Bearbeitung entfernt werden.

Während sämtlicher Aufbauschweissarbeiten wird die Temperatur des Hohlkörpers 1 mit Hilfe der von den Temperaturfühlern 55 gesteuerten Gasbrenner 50 und der von den Temperaturfühlern 45 gesteuerten Ventile 42 für das Kühlwasser auf optimale Höhe gehalten. Die einstellbare Drehzahl des Hohlkörpers 1 mittels des drehzahlvariablen Antriebsmotors 12 und die einstellbare Fortbewegungsgeschwindigkeit der Schweisswagen 23 bilden weitere Möglichkeiten zur Optimierung der Schweissparameter. Die Art der Anordnung der Schweisswagen 23 auf der Plattform 31 sowie der Hängebahn 33 mit der Laufkatze 34 gewährleisten eine schnelle Ersetzung von eventuell defekten Einheiten, ohne dass die Schweissarbeiten dabei wesentlich gestört werden.

Auf an sich bekannte Art vereinfacht eine vom elektrischen Stromfluss zwischen den Schweissdrähten 21 einerseits und dem Hohlkörper 1 andererseits gesteuerte Höheneinstellung der Tische 24 die ununterbrochene Fortführung
des Aufbauschweissens über die Absätze 5 hinweg, sowie
in den Bereichen des Bodens und des konischen Teiles
des Hohlkörpers 1.

Unter Anwendung bekannter Steuerungsmethoden ist es
ferner möglich, entweder durch Aenderung der Drehzahl
des Hohlkörpers 1 oder der Stromstärke, im Bereich der
Bahn 4 den Absatz 5 gleich beim Auftragen der ersten
Schweissschicht auf dem Grundkörper 3 zu bilden und
auch den Durchmesserunterschied zwischen den Bahnen 4
und dem Durchmesser des übrigen Aufbaukörpers 2 allmählich zu verringern, so dass am Ende des Aufbauschweissens beide den gleichen Durchmesser aufweisen.

Für den Aufbau des Hohlkörpers können verschiedene
Materialien für die verschiedenen Schichten gewählt
werden, wodurch die Eigenschaften des resultierenden
Hohlkörpers bedarfsmässig beeinflusst werden. Im Ausführungsbeispiel nach Fig. 1 und 2 werden der im voraus
hergestellte Bodenteil 2' des Aufbaukörpers 2 und die
flanschartigen Absätze 5 - welche ebenfalls Teile des
Aufbaukörpers 2 sind - so ausgebildet, dass sie sich
nahtlos in dem nachträglich hergestellten Teil des
Aufbaukörpers 2 einfügen.

In Fig. 3a befindet sich einer der Schweisswagen 23 am
Anfang einer der Bahnen 4. Die zwei ihm benachbarten
Schweisswagen 23 sind ebenfalls sichtbar. Auf dem Grundkörper 3 ist bereits ein relativ dicker Aufbaukörper 2 aufgetragen, auf dem die Schweissdrähte 21 der sichtbaren Schweisswagen 23 nacheinander drei weitere Schichten 37 aufschweissen. Der flanschartige Absatz 5, nun im Aufbaukörper 2 bereits völlig integriert, ist gestrichelt angedeutet. In Fig. 3b sind die Schweisswagen etwas weiter vorgerückt gezeichnet. Die vertikal gezeichneten Schweissdrähte 21 können auch geneigt angeordnet sein, so dass jedes Drahtpaar immer eine für den jeweiligen Fall optimale Schmelze bewirkt. Aus Fig. 3a und 3b ist ferner ersichtlich, dass die paarweise angeordneten Rollen 11 der Rollenböcke 10 so konstruiert sind, dass während des Aufbauschweissens im Bereich der Bahn 4 nur diejenige Rolle 11 trägt, in deren Bahnbreite momentan nicht geschweisst wird. Gemäss Fig. 3c sind die Rollen 11 eines Rollenpaares auf an sich bekannte Weise drehbar in je einer vertikalen Traggabel 60 angeordnet, die mit ihrem unteren Ende in je eine Bohrung 63 eines Stahlblockes 62 kolbenartig eingesteckt sind. Die Traggabeln weisen je zwei horizontale Nuten 64 auf, in denen je ein Dichtring 65 angeordnet ist. Zwischen den beiden Traggabeln 60 ist ein flaches Führungsstück 79 mittels einer Schraube 79' am oberen Ende des Stahlblockes 62 befestigt; die beiden Enden des Führungsstückes gleiten in je einer vertikalen Nut 61 der Traggabeln 60, so dass diese begrenzte, drehfreie Hubbewegungen ausführen können. Die unteren Stirnflächen der Traggabeln 60 begrenzen im Stahlblock 62 je eine mit Oel gefüllte Druckkammer 66. Die beiden Oelkammern sind über je eine ein Magnetventil 72 aufweisende Oelleitung 68 mit einem für beide Druckkammern gemeinsamen Oeltank 69 verbunden. Eine Oelpumpe 70 fördert Drucköl aus einer nicht gezeigten Quelle in den Oeltank 69, in dem oberhalb der Oelfüllung ein Luftpolster 71 vorhanden ist, das als Feder wirkt. Das Luftpolster ist mittels eines Entlastungsventils 80 mit der Atmosphäre verbindbar. Die Magnetventile 72 sind vom Typ "Stromlos zu" und sind mittels elektrischer Leitungen 78 und je einer unteren und einer oberen Stromschiene 74 bzw. 73 an eine Stromquelle 75 angeschlossen. Mittels eines elektrischen Isolators 77 ist an jedem Schweisswagen 23 eine elektrisch leitende Stange 76 befestigt, die beim Vorbeifahren des Wagens die Stromschienen 73, 74 miteinander verbindet. Jedes Paar Stromschienen 73 und 74 erstreckt sich über eine Länge, die etwas grösser als die Rollbreite einer Rolle 11 ist.

Normalerweise sind die Magnetventile 72 geschlossen, so dass das Oel oder ein anderes inkompressibles Medium innerhalb der Druckkammern 66 über die Traggabeln 60 die Rollen 11 fest gegen die daraufwirkenden Gewichte hält. Kommt nun der Schweisswagen 23 in die Nähe der Bahn 4 (Punkt A), so schliesst die leitende Stange 76 das in Fig. 3c rechte Paar der Stromschienen 73 und 74 kurz und verbindet somit das rechte Magnetventil 72 mit der Stromquelle 75. Dadurch öffnet das rechte Ventil 72 und der zugehörige Druckraum 66 wird mit dem Oeltank 69 verbunden. Die auf dem demnächst zu schweissenden Bereich der Bahn 4 laufende rechte Rolle 11 liegt somit - infolge des Luftpolsters 71 - nur noch federnd an der Bahn 4 an und trägt praktisch nicht mehr. Die Tragwirkung wird voll von der linken Rolle 11 übernommen, deren Magnetventil 72 noch geschlossen ist. Wenn der Schweisswagen 23 das linke Ende des rechten Stromschienenpaares verlässt, unterbricht die leitende Stange 76 die elektrische Verbindung dieser Schienen (Punkt B) und die Stromzufuhr zum rechten Magnetventil 72 wird unterbrochen; dieses schliesst und die bisher federnde Rolle 11 ist wieder tragfähig, da mit dem Schliessen des Ventils das Luftpolster wirkungslos wird. In gleicher Weise wiederholt sich der Vorgang bei der in Fig. 3c linken Rolle 11, wenn der Schweisswagen in den Bereich des linken Stromschienenpaares fährt.

Hieraus ist ersichtlich, dass beim Uebergang vom federnden zum tragenden Zustand einer Rolle 11 die momentane Höhenlage der Rolle 11 beibehalten wird, so dass der Hohlkörper nicht gehoben und somit eine Störung des Schweissvorganges vermieden wird. Es muss lediglich darauf geachtet werden, dass vor der Belastung der Rollen 11 der Oeldruck mittels der Oelpumpe 70 so eingestellt wird, dass die Traggabeln 60 in ihrer obersten Stellung sind, d.h. im Anschlag am Führungsstück 79. Bei der Auslegung sollten die vertikalen Nuten 61 vorzugsweise etwas länger sein als die volle Dicke des Aufbaukörpers 2, obwohl es auch möglich ist, während der Herstellung des Aufbaukörpers 2, in gewissen Zeitabständen, mittels der Oelpumpe 70 den Hohlkörper 1 zu heben und somit - trotz relativ kleiner Länge der Nuten 61 - einen sehr dicken Hohlkörper 1 herzustellen.

Mit zunehmendem Absenken der Traggabeln 60 infolge des grösser werdenden Durchmessers des Hohlkörpers 1 nimmt das Volumen des Luftpolsters 71 allmählich ab, wodurch seine federnde Wirkung beeinträchtigt wird. Dieses kann jedoch leicht durch kontrolliertes Ablassen von Luft mittels des Entlastungsventils 80 kompensiert werden.

Anstelle des hydropneumatischen Systems nach Fig. 3c ist es auch möglich, die Traggabeln 60 bei tragenden Rollen 11 durch Reibungsbremsen festzuhalten und bei federnden Rollen 11 durch andere Federarten abzustützen, z.B. Stahlfedern. Die Längenabnahme der Feder infolge des allmählichen Absinkens der Rollen 11 kann dabei auf bekannte Weise kompensiert werden, z.B. durch Absenken der Feder, was dem Luftablassen mittels des Entlastungsventils 80 in Fig. 3c entspricht. Es ist also in jedem
Fall möglich, die Lage der Drehachse des Hohlkörpers 1
während des ganzen Herstellungsverfahrens beizubehalten.

Im Ausführungsbeispiel nach Fig. 4 stützt sich ein Grundkörper 103 eines nach der Fertigung beidseitig offenen
Hohlkörpers 101 auf vier Rollenböcken 110 ab, von denen
je zwei sich an einer stutzenartigen Verlängerung 105
des Grundkörpers 103 befinden. Es handelt sich hier um
gewöhnliche Rollenböcke, deren Rollen 111, 111' einzeln,
d.h. nicht paarweise, vorgesehen sind. Die Rollenböcke
110 sind auf Wagen 113 angeordnet, die mittels Rädern
114 auf geraden Schienen 150 bewegbar sind. Die Rolle
111' wird mittels einer Kette 112' von einem drehzahlregulierbaren Antriebsmotor 112 angetrieben und dreht
dadurch den Hohlkörper 101 um seine horizontale Längsachse. Die für das Aufbauschweissen des Aufbaukörpers
102 notwendigen Vorrichtungen sind in Fig. 4 nicht gezeigt, da sie denen in Fig. 1 bis 3b entsprechen. Beide
Enden 105 des Grundkörpers 103 können sich unter Wärmeeinflüssen radial dehnen, und das Innere des Hohlkörpers
ist nach aussen mit Hilfe je einer Scheibe 108 abgeschlossen, die mittels Schrauben an einem eingeschweissten Ring 108' gehalten wird (Fig. 5). Durch einen im
Zentrum jeder Scheibe 108 angeordneten Stutzen 109, an
dem eine Kontaktscheibe 106 flanschartig befestigt ist,
wird Kühlmittel in das Innere des Hohlkörpers 101 zugeführt und Kühlmittel und Dampf daraus abgeführt. Dies
geschieht in gleicher Art wie in Fig. 1 und 2. Das
gleiche gilt für die Zuführung des Gleichstromes, wozu
hier an beiden Kontaktscheiben 106 schleifende Kontakte
107 vorhanden sind.

Abgesehen von dem wegen der einfacheren Gestalt des Hohlkörpers 101 einfacheren Aufbau der Schweissanlage geschieht die erfindungsgemässe Herstellung des Hohlkörpers 101 gleich wie die des Hohlkörpers 1.

Die axiale Abstützung des Hohlkörpers 101 wird dadurch erreicht, dass die Bahnen 104, auf denen die Rollen 111' laufen, leicht konisch ausgebildet sind, indem der Durchmesser der Bahnen von den Enden zur Mitte des Grundkörpers 103 hin zunehmen und der Durchmesser der Rollen 111', 111' dementsprechend abnimmt, wie dies in Fig. 5 übertrieben gezeichnet ist. Diese Fig. 5 zeigt ausserdem, dass die stutzenartige Verlängerung 105 mit einem Verstärkungsring 100 mit T-Querschnitt versehen ist, auf dessen Flansch die Rolle läuft. Es ist auch möglich, die stutzenartigen Verlängerungen 105' und 105" auf der Innenseite zu verstärken, wie dies in Fig. 6 und 7 gezeigt ist.

Gemäss Fig. 8 wird ein beidseitig offener Hohlkörper 201 hergestellt, der auf der Innenseite durch tragende Rollen 211, 211' abgestützt wird. Diese Ausführungsvariante eignet sich besonders für relativ kurze Hohlkörper. Es sind zwei Stützvorrichtungen 210 vorhanden, die je auf einem Wagen 213 angeordnet ist, der mittels Rädern 214 auf geraden, für beide Wagen 213 gemeinsamen Schienen 215 verschiebbar ist. Im wesentlichen besteht jede Stützvorrichtung aus einem auf dem Wagen 213 befestigten, vertikalen Zylinder 260, in dem ein Kolben 219 auf übliche Weise gleitbar angeordnet ist. Der unterste Bereich des Inneren des Zylinders 260 ist über ein Steuerventil 272 mit einem Pumpenaggregat 270 verbunden, das aus einem Oeltank, einer Pumpe und einem Antriebsmotor besteht. Beim Einschalten dieses Motors fördert die Pumpe Oel aus dem Oeltank in das Innere des Zylinders 260, wodurch der Kolben 219 nach oben verschoben wird. Nach dem Abstellen des Motors bleibt der Kolben 219 in der dann erreichten Höhenlage, solange das Steuerventil 272 geschlossen bleibt. Wird dieses Ventil geöffnet, so fliesst Oel in den Tank zurück und der Kolben 219 sinkt. Am oberen Ende jedes Kolbens 219 ist ein Lagerbock 218 bzw. 218' befestigt, in dem eine einseitig in den Hohlkörper ragende Welle 216 bzw. 216' drehbar gelagert ist, die die Rolle 211 bzw. 211' aufweisen. An dem Lagerbock 218 ist ein Antriebsmotor 212 befestigt, der die Welle 216 antreibt, die an ihrem freien Ende ein zentrales sechseckiges Loch aufweist. Die andere Welle 216' weist an ihrem freien Ende einen zentralen Sechskant 217 auf, der gleitbar in das sechseckige Loch der angetriebenen Welle 216 passt. An den beiden Wagen 213 ist ferner je eine Stützrolle 238 befestigt. Diese beiden Rollen sind bezüglich der vertikalen Mittelebene des Hohlkörpers einander gegenüberliegend angeordnet und bewahren diesen gegen Schwingungen um die Längsachse der Wellen 216 und 216'. Im Grundkörper 203 sind zwei ringförmige Axialstützen 290 befestigt, die jeweils die der Mitte des Hohlkörpers 201 zugewendete Stirnseite der Rollen 211 bzw. 211' berühren und somit eine axiale Verschiebung des Hohlkörpers 201 während des Aufbauschweissens verhindern. Die Kontakte 207 schleifen direkt auf der Innenseite des Grundkörpers 203. Zwei feststehende Scheiben 208 an den beiden Enden des Grundkörpers 203 schliessen dessen Innensaum nach aussen ab, wobei zwischen dem Rand der Scheiben 208 und den Stirnseiten des Hohlkörpers 1 Dichtungen, vorzugsweise Labyrinthdichtungen, vorgesehen sind. Aehnlich wie bei den anderen Beispielen durchdringen nicht gezeigte Kühlwasserzu- und -abfuhrleitungen sowie eine Dampfleitung die Scheiben 208.

Die Herstellung des Hohlkörpers 201 mit der Anlage in

Fig. 8 fängt damit an, dass der Grundkörper 203 mit seiner Längsachse in     Richtung der Schienen 215 auf diese abgesetzt wird. Die Wagen 213 werden dann von beiden Enden her - mit in die Zylinder 260 eingefahrenen Kolben 219 - gegeneinander geschoben,  bis der Sechskant 217 der Welle 216' in das sechseckige Loch in der Welle 216 steckt und die freien Enden dieser Wellen 216 und 216' aneinander gepresst sind. Die beiden Wagen 213 werden dann in dieser Stellung realtiv zueinander fixiert, beispielsweise mit einer in Fig. 8 nicht gezeigten, die Wagen miteinander verbindenden Kette, um zu verhindern, dass sie sich ungewollt auseinander bewegen. Daraufhin werden die Pumpenaggregate 270 eingeschaltet und die Kolben 219, miteinander synchronisiert, gehoben, bis die Rollen 211 und 211' den Grundkörper 203 in die gewünschte Höhe gehoben haben und die für die Aufbauschweissung erforderliche Nivelierung vorhanden ist, wobei die Steuerventile 272 die nötige feine Steuerung ermöglichen. Nun werden die Stützrollen 238 in entgegengesetzten Richtungen bis zur Berührung mit der Innenseite des Grundkörpers 203 verschoben und in dieser Lage fixiert. Als nächstes werden die axialen Stützringe 290 durch Schweissen oder Verschrauben am Grundkörper 203 befestigt und danach die Wagen 213 zusammen mit dem Grundkörper auf den Schienen 215 soweit verschoben, bis der Grundkörper 203 unterhalb der Schweissköpfe liegt. Der Aufbaukörper 202 wird dann durch Aufbauschweissen nach dem bereits im Zusammenhang mit   Fig. 1 und 2 beschriebenen Verfahren aufgebaut.

Das erfindungsgemässe Verfahren lässt sich auch bei anderen Verfahren als dem Unterpulverschweissen anwenden, wie z.B. beim TIG-Verfahren.  Auch die Anwendung von anderem Strom als Gleichstrom ist möglich, ebenso wie die umgekehrte Polung des Gleichstromes.

Statt der gezeigten, relativ einfachen Hohlkörper können mit dem erfindungsgemässen Aufbauschweissverfahren auch Stutzen, Verstärkungsrippen und andere von der zylindrischen Grundform abweichende Teile auf dem Hohlkörper aufgebaut werden. In Fig. 1 und 2 ist bereits die Ausbildung der von der sonst glatten Oberfläche des Aufbaukörpers 2 vorstehenden Absätze 5 als Beispiel einer solchen Möglichkeit gezeigt. Durch Steuern des erfindungsgemässen Verfahrens und der erfindungsgemässen Anlage durch Computer wird die vollständige Automatisierung möglich, sogar bei sehr komplexen Formen des Hohlkörpers.

In manchen Fällen ist es von Vorteil, das Herausarbeiten des Grundkörpers nach Beendigung des Auftragschweissens dadurch zu vereinfachen, dass der Hohlkörper in zwei zylindrischen Teilen hergestellt wird. Auch dann werden noch wesentliche Vorteile gegenüber dem Stand der Technik erzielt, da - ausser dem Vermeiden eines zusätzlichen Stützkörpers - die Teilungsstelle in den am wenigsten beanspruchten mittleren Bereich des zylindrischen Hohlkörpers gelegt werden kann.

Zur Erhöhung der Betriebssicherheit ist es empfehlenswert, die Magnetventile 72 in Fig. 3c und die Steuerventile 272 in Fig. 8 redundant, in Serie und/oder parallel, vorzusehen.

Das Vorwärmen des Hohlkörpers kann mit Hilfe anderer Wärmequellen als den Gasbrennern 50 erfolgen, z.B. mit Infrarotstrahlern.

Gebrüder Sulzer AG    - 1 -        P.5920 Stph

Patentansprüche

1. Verfahren zur Herstellung eines im wesentlichen zylindrischen Hohlkörpers, der durch Bilden eines Aufbaukörpers auf einem Grundkörper mittels formgebendem Aufbauschweissen entsteht, wobei der zylindrische Hohlkörper während des Aufbauschweissens um seine horizontale Längsachse gedreht wird, dadurch gekennzeichnet, dass während des Aufbauschweissens der Hohlkörper von mindestens zwei Rollen unmittelbar getragen wird.

2. Verfahren nach Anspruch 1, dadurch gekennzeichnet, dass zunächst auf dem Grundkörper und gegebenenfalls danach auf dem Aufbaukörper mindestens zwei flanschartige Absätze durch Aufbauschweissen hergestellt werden, die als Laufbahn für die Rollen und zur Vergrösserung der radialen Formbeständigkeit mindestens des Grundkörpers dienen.

3. Verfahren nach Anspruch 2, dadurch gekennzeichnet, dass die Lauffläche der Absätze vor ihrer ersten Berührung mit den Rollen spanabhebend bearbeitet wird.

4. Verfahren nach Anspruch 1, dadurch gekennzeichnet, dass der Grundkörper in axialer Richtung über den zu bildenden Aufbaukörper hinaus verlängert und radial verstärkt wird, wobei diese Verlängerungen als Laufbahn für die Rollen dienen.

5. Verfahren nach einem der Ansprüche 1 bis 4, dadurch gekennzeichnet, dass der zylindrische Hohlkörper von aussen vorgewärmt und/oder von innen gekühlt wird.

6. Verfahren nach einem der Ansprüche 1 bis 5, dadurch gekennzeichnet, dass das Aufbauschweissen nach dem Unterpulverschweissverfahren erfolgt und die Schweisselektroden an dem negativen Pol und der Grundkörper über schleifende Kontakte an dem positiven Pol eines Gleichstromgenerators angeschlossen werden.

7. Anlage zum Durchführen des Verfahrens nach Anspruch 1, dadurch gekennzeichnet, dass mindestens eine der tragenden Rollen als drehender Antrieb für den Hohlkörper ausgebildet ist.

8. Anlage nach Anspruch 7, dadurch gekennzeichnet, dass Haltemittel zum axialen Festhalten des sich drehenden Hohlkörpers vorhanden sind.

9. Anlage nach Anspruch 7 oder 8, dadurch gekennzeichnet, dass - in axialer Richtung gesehen - zu jeder Rolle eine weitere parallele Rolle vorgesehen ist und dass Steuermittel vorhanden sind, die während des Aufbauschweissens einer Laufbahn die eine Rolle nur lose - vorzugsweise federnd - an die Laufbahn anlegen und die tragende Funktion der anderen Rolle zuweisen.

10. Anlage nach einem der Ansprüche 7 bis 9, dadurch gekennzeichnet, dass - in Drehrichtung des Hohlkörpers gesehen - zwischen der Schweissstelle und der Rolle ein Werkzeug zur spanabhebenden Bearbeitung Lauffläche am Hohlkörper vorgesehen ist.

0184650

Fig. 1

0184650

Fig. 2

0184650

Fig. 3c

Fig. 3a

Fig. 3b

Fig. 4

Fig. 5

Fig. 6

Fig. 7

Fig. 8

4/4

0184650

Europäisches Patentamt

**EUROPÄISCHER RECHERCHENBERICHT**

0184650

Nummer der Anmeldung

EP 85 11 3575

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-1 301 696 (MITSUBISHI) * Spalte 5, Zeilen 33-35 * | 1,4,8 | B 23 K 9/04 |
| Y | | 7,10 | |
| | --- | | |
| Y | US-A-2 175 607 (KINKEAD) * Seite 4, linke Spalte, Zeilen 20-25; Figuren 1-3 * | 7,10 | |
| | --- | | |
| A | AU-B- 51 951 (R.F. ARNOLDY) | | |
| | --- | | |
| A | GB-A-2 061 156 (BLOHM & VOSS) | | |
| | ----- | | |

|  | RECHERCHIERTE SACHGEBIETE (Int. Cl.4) |
|---|---|
| | B 23 K |

Der vorliegende Recherchenbericht wurde für alle Patentansprüche erstellt.

| Recherchenort | Abschlußdatum der Recherche | Prüfer |
|---|---|---|
| DEN HAAG | 11-12-1985 | HOORNAERT W. |